# EUROPEAN PATENT APPLICATION

(11) **EP 2 959 996 A1**
(43) Date of publication of application: **30.12.2015**
(21) Application number: 14174771.7
(22) Date of filing: 27.06.2014
(51) Int. Cl.: B23C 5/10

(54) **Milling cutter with core having two tapered portions**

(71) Applicant: Seco Tools AB, SE-737 82 Fagersta (SE)
(72) Inventor: Alsters, Rob, 5971 Grubbenvorst (NL)
(74) Representative: Klöfver, Jörgen

(57) **Abstract**

A rotary milling cutter (21) includes a core (23) and a plurality of teeth (25) extending from the core (23). The core (23) includes a first core portion (27) having a first end (29) proximate a distal end (31) of the cutter and a second core portion (33), a smallest diameter (DS2) of the second core portion (33) being larger than a largest diameter (DL1) of the first core portion (27). At least one of the first core portion (27) and the second core portion (33) increases in diameter in a direction away from the distal end (31) of the cutter (21).

## Description

### BACKGROUND AND SUMMARY

EP1072345A2, which is incorporated by reference, explains that the design of end mills typically involves a tradeoff between large core diameter, which can assist in providing a rigid tool, and greater tooth depth which can assist in chip removal and lubricant access to the cutting edge, and observes that a constant diameter core is not the best way of allocating limited available space in the design of an end mill. Further, to minimize tool deflection, it is proposed that more metal be provided at portions of the core that tend to be subjected to the greatest bending moment, such as close to where the end mill is gripped by the tool holder or near the ends of tooth flutes closest to the cutter shank. EP10282345A2 proposes an end milling cutter with a core that gradually increases in diameter from the cutting end toward the cutter shank. The resulting end milling cutter design, while representing an improvement, still is substantially lacking in design flexibility for achieving the best balance between chip removal characteristics and tool rigidity.

It is desirable to provide an end milling cutter that improves design flexibility for achieving desired balances between chip removal characteristics and tool rigidity.

In accordance with an aspect of the present invention, a rotary milling cutter, comprising a core and a plurality of teeth extending from the core, characterized in that the core comprises a first core portion having a first end proximate a distal end of the cutter and a second core portion, a smallest diameter of the second core being larger than a largest diameter of the first core portion, and in that at least one of the first core and the second core increases in diameter in a direction away from the distal end of the cutter.

### BRIEF DESCRIPTION OF THE DRAWINGS

The features and advantages of the present invention are well understood by reading the following detailed description in conjunction with the drawings in which like numerals indicate similar elements and in which:
FIG. 1 is a side view of a rotary milling cutter according to an aspect of the present invention;
FIG. 2 is an end view of the rotary milling cutter of FIG. 1; and
FIG. 3 is a partially cross-sectional view of the milling cutter of FIG. 1.

### DETAILED DESCRIPTION

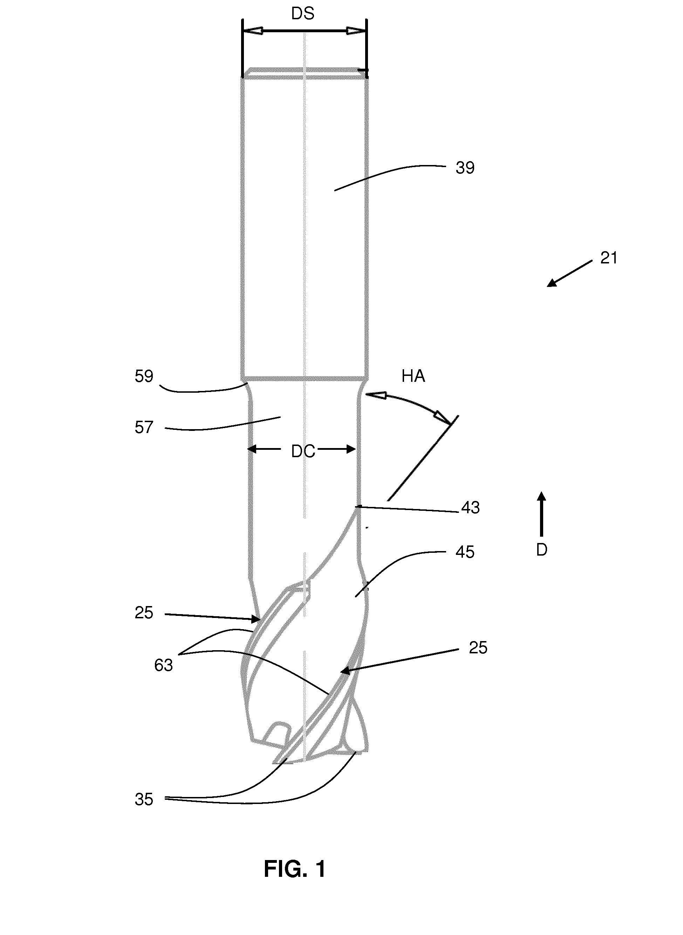

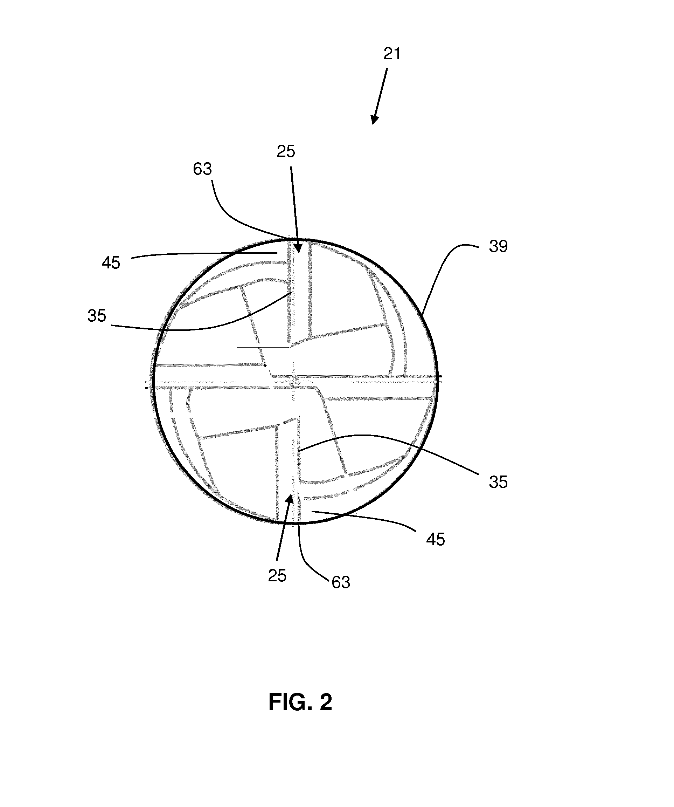

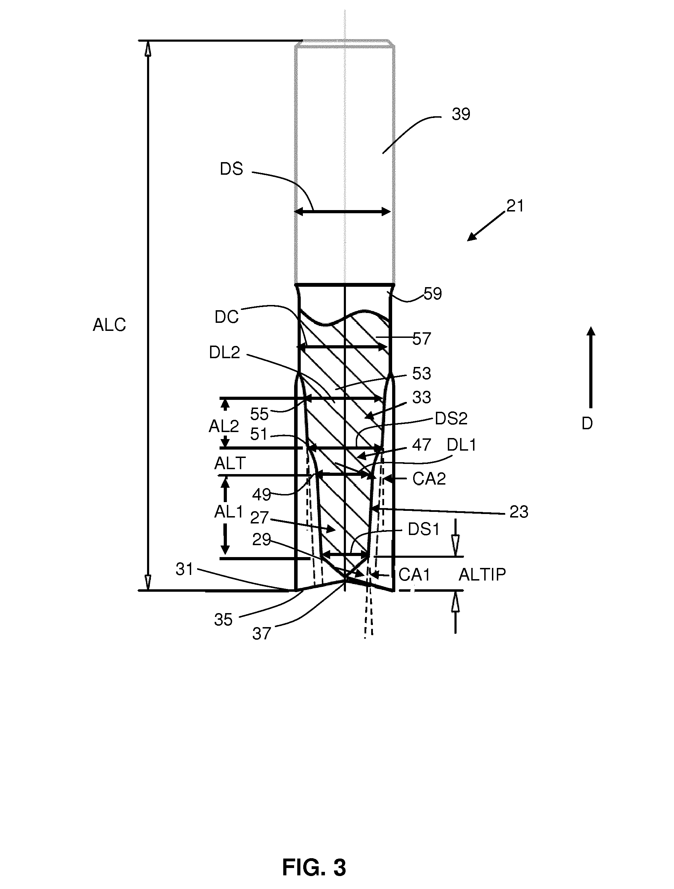

A rotary end milling cutter 21 is shown in FIGS. 1-3 and comprises a core 23 (FIG. 3) and a plurality of teeth 25 extending from the core. The core 23 comprises a first core portion 27 having a first end 29 proximate a distal end 31 of the rotary milling cutter 21 and a second core portion 33. "Proximate" in the sense used here is defined as either at the distal end 31 or close to the distal end but separated from the distal end by a small distance, such as where a portion of a tip cutting edge 35 and/or a portion of a tip 37 of the core is disposed between the first end 29 of the first core portion 27 and the distal end of the cutter.

A smallest diameter DS2 of the second core 33 is larger than a largest diameter DL1 of the first core portion 27. At least one of the first core portion 27 and the second core portion 33 increases in diameter in a direction D away from the distal end 31 of the milling cutter 21. Ordinarily, both the first and the second core portions 27 and 33 increase in diameter in the direction D away from the distal end 31 of the milling cutter 21. Providing a smaller diameter core portion 27 closest to the distal end 31 of the milling cutter 21 can be useful to facilitate chip removal from a hole formed by the workpiece, while providing a larger diameter core further from the distal end can reduce bending of the cutter, particularly at portions of the cutter that tend to be subjected to the greatest bending moment during a cutting operation, especially portions remote from the end of the cutter, such as at the ends 43 of the tooth flutes 45 closest to the shank 39, or near where the milling cutter is gripped by a toolholder, i.e., on the shank. By providing two core portions 27 and 33 of different diameters, the dimensions of the smaller core portion can be optimized for purposes of chip removal while the dimensions of the larger core portion can be optimized for purposes of resistance to bending forces.

A transition portion 47 is disposed between a second end 49 of the first core portion 27 and a first end 51 of the second core portion 33. The transition portion 47 can extend a non-zero axial distance between the first core portion 27 and the second core portion 33. At least one of and, ordinarily, both of the first and second core portions 27 and 33 has a cone angle CA1 and CA2. The transition portion 47 can comprise a single cone angle that is greater than the cone angle CA1 or CA2 of the at least one of the first and second core portions 27 and 33, but preferably comprises a gradual, concave transition from the cone angle CA1 at the second end 49 of the first core portion to a conical or concave portion adjacent the first end 51 of the second core portion to avoid sharp transitions from smaller to larger diameters that can be the site of stress concentrations. The axial length ALT of the transition portion 47 is ordinarily less than the core diameter at the second end 49 of the first core portion 27, ordinarily between about 0.25 and 0.75, and more preferably between 0.4 and 0.6 of the core diameter at the second end of the first core portion.

A transition portion 53 can be disposed between the second end 55 of the second core portion 33 and a circularly cylindrical portion 57 of the cutter 21. A further transition portion 59 can be provided between the circularly cylindrical portion 57 of the cutter 21 and a larger shank portion 39 that is intended for being gripped by a tool holder. The transition portions 53 and 59 are ordinarily concave in shape to avoid sharp transitions that can be the site of stress concentrations.

The cone angle CA1 and CA2 of the first and the second core portions 27 and 33 can be, but is not necessarily, the same. The at least one of the first and second core portions 27 and 33 has, and typically both have, a cone angle CA1 and/or CA1 of between 3-6 degrees, more preferably between 4-5 degrees, and still more preferably 4.5 degrees. In the illustrated embodiment, the first core portion 27 is axially longer than the second core portion 33, however, it may be shorter. The axial length AL1 of the first core portion 27, including the axial length ALTIP of the tip portion 37, is ordinarily 2 to 4 times, more preferably 2.5 to 3.5 times, and still more preferably about 3 times the diameter DS1 of the first core portion at the first end 29 of the first core portion. The axial length AL2 of the second core portion 33 is typically about 0.5 to 1.5 times, more preferably 0.8 to 1.2 times, and still more preferably about 0.9 to 1.1 times the diameter DS2 of the second core portion at the first end 51 of the second core portion. The first and second core portions 27 and 33 have diameters at their second ends 49 and 55 of DL1 and DL2. The cylindrical portion 57 has a largest cross-sectional dimension DC that is greater than DL2, and the shank portion 39 has a largest cross-sectional dimension DS that is at least as great as DC. The cylindrical portion 57 and the shank portion 39 may be but are not necessarily circularly cylindrical.

The cutter 21 according to an aspect of the present invention facilitates selecting a first core portion 27 cone angle CA1, a second core portion 33 cone angle CA2, a first core portion length, a second core portion length, and a transition portion length and shape to achieve a desired balance between chip removal characteristics and tool rigidity.

In the illustrated cutter 21, each tooth 25 of the plurality of teeth comprises a cutting edge 63. The cutting edge 63 extends over an entire length of the first core portion 27. The cutting edge 63 may extend over the entire length of the second core portion 33 but ordinarily extends over less than an entire length of the second core portion, and may not extend over the second core portion at all. This can facilitate removal of chips from the flutes 45 around the second core portion 33 which are of lesser depth than the flutes around the first core portion 27. The teeth 25 and flutes 45 are ordinarily helical and define a helical angle HA of between 30-60 degrees, more preferably between 40-50 degrees, and still more preferably about 45 degrees.

The plurality of teeth 25 ordinarily define a cylindrical profile over at least part of an axial length ALC of the cutter 21 when the cutter is rotated around a longitudinal axis thereof, although the teeth may be provided to define a non-cylindrical profile, such as a conical profile. The plurality of teeth 25 define a corresponding plurality of flutes 45, and a depth of the plurality of flutes decreases in the direction away from the distal end 31 of the cutter.

In order to increase cutting tool life, the cutter 21 can be provided with coolant passages. Such coolant may be provided from the shank towards the cutting edges via, for example, internal channels such as a central coolant channel.

In the present application, the use of terms such as "including" is open-ended and is intended to have the same meaning as terms such as "comprising" and not preclude the presence of other structure, material, or acts. Similarly, though the use of terms such as "can" or "may" is intended to be open-ended and to reflect that structure, material, or acts are not necessary, the failure to use such terms is not intended to reflect that structure, material, or acts are essential. To the extent that structure, material, or acts are presently considered to be essential, they are identified as such.

While this invention has been illustrated and described in accordance with a preferred embodiment, it is recognized that variations and changes may be made therein without departing from the invention as set forth in the claims.

## Claims

1. A rotary milling cutter (21), comprising a core (23) and a plurality of teeth (25) extending from the core (23), **characterized in that** the core (23) comprises a first core portion (27) having a first end (29) proximate a distal end (31) of the cutter and a second core portion (33), a smallest diameter (DS2) of the second core portion (33) being larger than a largest diameter (DL1) of the first core portion (27), and **in that** at least one of the first core portion (27) and the second core portion (33) increases in diameter in a direction away from the distal end (31) of the cutter (21).

2. The rotary milling cutter (21) as set forth in claim 1, wherein both the first and second core portions (27 and 33) increase in diameter in the direction away from the distal end (31) of the cutter (21).

3. The rotary milling cutter (21) as set forth in any of claims 1-2, wherein a transition portion (47) extends a non-zero axial distance between the first core portion (27) and the second core portion (33).

4. The rotary milling cutter (21) as set forth in claim 3, wherein the first and second core portions (27 and 33) are both axially longer than the transition portion (47).

5. The rotary milling cutter (21) as set forth in any of claims 1-4, wherein the first and second core portions (27 and 33) each have a cone angle (CA1 and CA2).

6. The rotary milling cutter (21) as set forth in claim 5, wherein the cone angle (CA1 and CA2) of the first and second core portions (27 and 33) is the same.

7. The rotary milling cutter (21) as set forth in any of claims 1-6, wherein the at least one of the first and second core portions (27 and 33) has a cone angle (CA1 and CA2) of between 3-6 degrees, more preferably between 4-5 degrees, and still more preferably 4.5 degrees.

8. The rotary milling cutter (21) as set forth in any of claims 1-7, wherein the first core portion (27) is axially longer than the second core portion (33).

9. The rotary milling cutter (21) as set forth in any of claims 1-8, wherein the cutter (21) comprises a cylindrical portion (57) at an end of the second core portion (33) most remote from the distal end (31) of the cutter.

10. The rotary milling cutter (21) as set forth in any of claims 1-9, wherein each tooth of the plurality of teeth (25) comprises a cutting edge (63).

11. The rotary milling cutter (21) as set forth in claim 10, wherein the cutting edge (63) extends over an entire length of the first core portion (27).

12. The rotary milling cutter (21) as set forth in any of claims 10-11, wherein the cutting edge (63) extends over less than an entire length of the second core portion (33)..

13. The rotary milling cutter (21) as set forth in any of claims 1-12, wherein the plurality of teeth (25) define a cylindrical profile over at least part of an axial length of the cutter (21) when the cutter is rotated around a longitudinal axis thereof.

14. The rotary milling cutter (21) as set forth in any of claims 1-13, wherein the plurality of teeth (25) define a plurality of flutes (45), a depth of the plurality of flutes (45) decreasing in the direction away from the distal end (31) of the cutter (21).

15. The rotary milling cutter as set forth in any of claims 1-14, wherein the cutter (21) is provided with coolant passages.
